# EUROPEAN PATENT APPLICATION

(11) **EP 4 456 632 A1**
(43) Date of publication of application: **30.10.2024**
(21) Application number: 21968673.0
(22) Date of filing: 24.12.2021
(51) Int. Cl.: H04W 72/04

(54) **CROSS-LINK INTERFERENCE MEASUREMENT METHOD AND APPARATUS, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2021/141226
(87) International publication number: WO 2023/115542

(57) **Abstract**

The present disclosure provides a method and apparatus for cross-link interference measurement and a storage medium. The method includes: transmitting a cross-link interference measurement request message, where the cross-link interference measurement request message is configured to request an inter-base-station cross-link interference measurement with a second base station, and the second base station is a neighboring base station of the first base station; receiving measurement configuration information, where the measurement configuration information is information for the first base station to perform the inter-base-station cross-link interference measurement; and performing, based on the measurement configuration information, the inter-base-station cross-link interference measurement to determine a measurement result. The present disclosure achieves the purpose of performing the inter-base-station cross-link interference measurement, and optimizes network performance.

## Description

### TECHNICAL FIELD

The present disclosure relates to the field of communication technologies, and in particular to a method and apparatus for cross-link interference measurement and a storage medium.

### BACKGROUND

Currently, considering that a downlink reception of a terminal causes cross-interference to an uplink transmission of another terminal, it is possible to perform cross-link interference (CLI) measurement between the terminals and schedule the uplink services of the terminals based on a measurement result.

### SUMMARY

To overcome the problems in the related art, embodiments of the present disclosure provide a method and apparatus for cross-link interference measurement and a storage medium.

According to a first aspect of the embodiments of the present disclosure, there is provided method and apparatus for cross-link interference measurement, performed by a first base station, and including:
transmitting a cross-link interference measurement request message, where the cross-link interference measurement request message is configured to request an inter-base-station cross-link interference measurement with a second base station, and the second base station is a neighboring base station of the first base station;
receiving measurement configuration information, where the measurement configuration information is information for the first base station to perform the inter-base-station cross-link interference measurement; and
performing, based on the measurement configuration information, the inter-base-station cross-link interference measurement to determine a measurement result.

In an embodiment, the transmitting the cross-link interference measurement request message includes:
transmitting, via an inter-base-station interface the first base station and the second base station, the cross-link interference measurement request message to the second base station;
the receiving the measurement configuration information includes:
   receiving, via the inter-base-station interface between the first base station and the second base station, the measurement configuration information transmitted by the second base station.

In an embodiment, the transmitting the cross-link interference measurement request message includes:
transmitting, via an interface between the first base station and a core network device, the cross-link interference measurement request message to the core network device, where the cross-link interference measurement request message is forwarded by the core network device to the second base station;
the receiving the measurement configuration information includes:
   receiving, via the interface between the first base station and the core network device, the measurement configuration information transmitted by the core network device, where the measurement configuration information is transmitted by the second base station to the core network device.

In an embodiment, the measurement configuration information includes at least one of: a downlink reference signal of the second base station measured by the first base station when the first base station performs the inter-base-station cross-link interference measurement; or resource configuration information for the downlink reference signal.

In an embodiment, the downlink reference signal includes at least one of: a synchronization signal and physical broadcast channel (PBCH) block (SSB); a channel state information-reference signal (CSI-RS); or a positioning reference signal (PRS).

In an embodiment, the method further includes:
receiving reporting configuration information, where the reporting configuration information is information for the first base station to report the measurement result; and
reporting, based on the reporting configuration information, the measurement result.

In an embodiment, the reporting configuration information includes at least of a reporting condition or a reporting mode; the reporting, based on the reporting configuration information, the measurement result includes at least one of: reporting, in response to the reporting condition being met, the measurement result; or reporting, based on the reporting mode, the measurement result.

In an embodiment, the reporting condition is configured to indicate a minimum threshold value for reporting the measurement result; and/or, the reporting mode includes at least one of: reporting indication information for indicating that the measurement result meets the reporting condition; or reporting a measurement value corresponding to the measurement result.

In an embodiment, the method further includes:
determining, based on the measurement result, a time unit for uplink service scheduling adjustment; and
performing the uplink service scheduling adjustment on a terminal which is within the coverage region of the first base station in the time unit.

In an embodiment, the performing the uplink service scheduling adjustment on the terminal which is within the coverage region of the first base station in the time unit includes:
stopping uplink service scheduling for the terminal.

According to a second aspect of the embodiments of the present disclosure, there is provided method and apparatus for cross-link interference measurement, performed by a second base station, and including:
receiving a cross-link interference measurement request message, where the cross-link interference measurement request message is for a first base station to request an inter-base-station cross-link interference measurement with the second base station, and the first base station is a neighboring base station of the second base station; and
transmitting, based on the cross-link interference measurement request message, measurement configuration information, where the measurement configuration information is information for the first base station to perform the inter-base-station cross-link interference measurement.

In an embodiment, the receiving the cross-link interference measurement request message includes:
receiving, via an inter-base-station interface between the first base station and the second base station, the cross-link interference measurement request message transmitted by the first base station;
the transmitting the measurement configuration information includes:
   transmitting, via the inter-base-station interface, the measurement configuration information to the first base station.

In an embodiment, the receiving the cross-link interference measurement request message includes:
receiving, via an interface between the second base station and a core network device, the cross-link interference measurement request message transmitted by the core network device, where the cross-link interference measurement request message is transmitted by the first base station to the core network device;
the transmitting the measurement configuration information includes:
   transmitting, via the interface between the second base station and the core network device, the measurement configuration information to the core network device, where the measurement configuration information is forwarded by the core network device to the first base station.

In an embodiment, the measurement configuration information includes at least one of: a downlink reference signal of the second base station measured by the first base station when the first base station performs the inter-base-station cross-link interference measurement; or resource configuration information for the downlink reference signal.

In an embodiment, the downlink reference signal includes at least one of: a synchronization signal and physical broadcast channel (PBCH) block (SSB); a channel state information-reference signal (CSI-RS); or a positioning reference signal (PRS).

In an embodiment, the method further includes:
transmitting reporting configuration information, where the reporting configuration information is information for the first base station to report the measurement result of the inter-base-station cross-link interference measurement; and
receiving the measurement result.

In an embodiment, the reporting configuration information includes at least of a reporting condition or a reporting mode.

In an embodiment, the reporting condition is configured to indicate a minimum threshold value for reporting the measurement result; and/or,
the reporting mode includes at least one of:
reporting indication information for indicating that the measurement result meets the reporting condition; or
reporting a measurement value corresponding to the measurement result.

According to a third aspect of the embodiments of the present disclosure, there is provided an apparatus for cross-link interference measurement, applied to a first base station, and including:
a first transmitting module, configured to transmit a cross-link interference measurement request message, where the cross-link interference measurement request message is configured to request an inter-base-station cross-link interference measurement with a second base station, and the second base station is a neighboring base station of the first base station;
a first receiving module, configured to receive measurement configuration information, where the measurement configuration information is information for the first base station to perform the inter-base-station cross-link interference measurement; and
a measurement module, configured to perform, based on the measurement configuration information, the inter-base-station cross-link interference measurement to determine a measurement result.

In an embodiment, the measurement configuration information includes at least one of: a downlink reference signal of the second base station measured by the first base station when the first base station performs the inter-base-station cross-link interference measurement; or resource configuration information for the downlink reference signal.

In an embodiment, the downlink reference signal includes at least one of: a synchronization signal and physical broadcast channel (PBCH) block (SSB); a channel state information-reference signal (CSI-RS); or a positioning reference signal (PRS).

In an embodiment, the apparatus further includes:
a third receiving module, configured to receive reporting configuration information, where the reporting configuration information is information for the first base station to report the measurement result; and
a reporting module, configured to report, based on the reporting configuration information, the measurement result.

In an embodiment, the apparatus further includes:
a determination module, configured to determine, based on the measurement result, a time unit for uplink service scheduling adjustment; and
a adjustment module, configured to perform the uplink service scheduling adjustment on a terminal which is within the coverage region of the first base station in the time unit.

According to a fourth aspect of the embodiments of the present disclosure, there is provided an apparatus for cross-link interference measurement, applied to a second base station, and including:
a second receiving module, configured to receive a cross-link interference measurement request message, where the cross-link interference measurement request message is for a first base station to request an inter-base-station cross-link interference measurement with the second base station, and the first base station is a neighboring base station of the second base station; and

A second transmitting module, configured to transmit, based on the cross-link interference measurement request message, measurement configuration information, where the measurement configuration information is information for the first base station to perform the inter-base-station cross-link interference measurement.

In an embodiment, the measurement configuration information includes at least one of: a downlink reference signal of the second base station measured by the first base station when the first base station performs the inter-base-station cross-link interference measurement; or resource configuration information for the downlink reference signal.

In an embodiment, the downlink reference signal includes at least one of: a synchronization signal and physical broadcast channel (PBCH) block (SSB); a channel state information-reference signal (CSI-RS); or a positioning reference signal (PRS).

In an embodiment, the apparatus further includes:
a fourth transmitting module, configured to transmit reporting configuration information, where the reporting configuration information is information for the first base station to report the measurement result of the inter-base-station cross-link interference measurement; and
a fourth receiving module, configured to receive the measurement result.

According to a fifth aspect of the embodiments of the present disclosure, there is provided a computer-readable storage medium, storing computer programs thereon, where the computer programs, when executed by a processor, cause the processor to perform the method for cross-link interference measurement at the first base station side.

According to a sixth aspect of the embodiments of the present disclosure, there is provided a computer-readable storage medium, storing computer programs thereon, where the computer programs, when executed by a processor, cause the processor to perform the method for cross-link interference measurement at the second base station side.

According to a seventh aspect of the embodiments of the present disclosure, there is provided a device for cross-link interference measurement, including: a processor; and a memory storing instructions executable by the processor; where the instructions, when executed by the processor, cause the processor to perform the method for cross-link interference measurement at the first base station side.

According to an eighth aspect of the embodiments of the present disclosure, there is provided a device for cross-link interference measurement, including: a processor; and a memory storing instructions executable by the processor; where the instructions, when executed by the processor, cause the processor to perform the method for cross-link interference measurement at the second base station side.

The technical solutions provided by the embodiments of the present disclosure may include the following beneficial effects.

In the present disclosure, the first base station may transmit the cross-link interference measurement request message to request the inter-base-station cross-link interference measurement with the second base station, and further, the first base station may perform the inter-base-station cross-link interference measurement according to the received measurement configuration information, so as to determine the measurement result. The present disclosure achieves the purpose of performing the inter-base-station cross-link interference measurement, and optimizes network performance.

It is to be understood that the above general descriptions and the below detailed descriptions are merely exemplary and explanatory, and are not intended to limit the present disclosure.

### BRIEF DESCRIPTION OF THE DRAWINGS

The accompanying drawings herein, which are incorporated in and constitute a part of the present description, illustrate examples consistent with the present disclosure and serve to explain the principles of the present disclosure together with the description.
FIG. 1 is a schematic diagram illustrating a inter-base-station cross-link interference scenario according to an embodiment.
FIG. 2 is a flowchart illustrating a method for cross-link interference measurement according to an embodiment of the present disclosure.
FIG. 3 is a flowchart illustrating a method for cross-link interference measurement according to another embodiment of the present disclosure.
FIG. 4 is a flowchart illustrating a method for cross-link interference measurement according to yet another embodiment of the present disclosure.
FIG. 5 is a flowchart illustrating a method for cross-link interference measurement according to still another embodiment of the present disclosure.
FIG. 6 is a flowchart illustrating a method for cross-link interference measurement according to still another embodiment of the present disclosure.
FIG. 7 is a flowchart illustrating a method for cross-link interference measurement according to still another embodiment of the present disclosure.
FIG. 8 is a flowchart illustrating a method for cross-link interference measurement according to still another embodiment of the present disclosure.
FIG. 9 is a flowchart illustrating a method for cross-link interference measurement according to still another embodiment of the present disclosure.
FIG. 10 is a flowchart illustrating a method for cross-link interference measurement according to still another embodiment of the present disclosure.
FIG. 11 is a flowchart illustrating a method for cross-link interference measurement according to still another embodiment of the present disclosure.
FIG. 12 is a flowchart illustrating a method for cross-link interference measurement according to still another embodiment of the present disclosure.
FIG. 13 is a block diagram illustrating an apparatus for cross-link interference measurement according to an embodiment of the present disclosure.
FIG. 14 is a block diagram illustrating an apparatus for cross-link interference measurement according to another embodiment of the present disclosure.
FIG. 15 is a schematic structural diagram illustrating a device for cross-link interference measurement according to an embodiment of the present disclosure.
FIG. 16 is a schematic structural diagram illustrating a device for cross-link interference measurement according to another embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise. It will also be understood that as used herein, the term "and/or" is and includes any or all combinations of one or more of the associated listed items.

It will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if' may be interpreted as "while ..." or "when ..." or "in response to a determination".

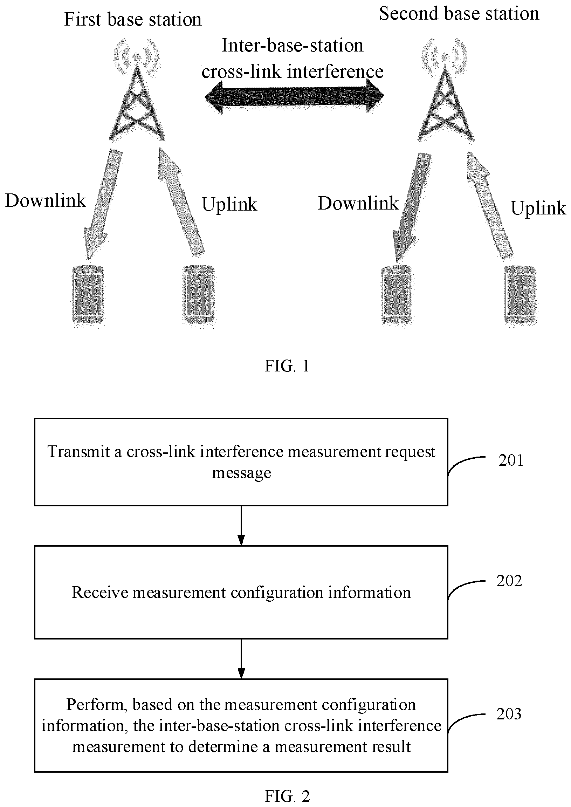

In a new radio (NR) time division duplexing (TDD) system, full-duplex operation can improve system capability, including increasing system throughput and reducing delay, but also causes cross-interference between base stations. Referring to FIG. 1, for adjacent base stations that both support full duplex, a downlink transmission of a base station 1 will cause cross-interference to a uplink reception of a base station 2, but there is no solution to measure the cross-interference between the base stations in the related art.

To overcome the problem in the related art, the embodiments of the present disclosure provide a method for a method for cross-link interference measurement. The method for cross-link interference measurement provided by the present disclosure is described below, first at a first base station side.

An embodiment of the present disclosure provides a method for cross-link interference measurement. FIG. 2 is a flowchart illustrating a method for cross-link interference measurement according to the embodiment of the present disclosure. Referring to FIG. 2, the method can be performed by the first base station, and it will be understood that the first base station may be any base station that supports full duplex. The method may include the following steps 201 to 203.

At step 201, the cross-link interference measurement request message is transmitted.

In this embodiment, the cross-link interference measurement request message is configured to request an inter-base-station cross-link interference measurement with a second base station, and the second base station is a neighboring base station of the first base station. The second base station may be any neighboring base station of the first base station that supports full duplex.

At step 202, the measurement configuration information is received.

In this embodiment, the measurement configuration information is information for the first base station to perform the inter-base-station cross-link interference measurement. In this embodiment, the measurement configuration information may be configured by the second base station.

At step 203, the inter-base-station cross-link interference measurement is performed based on the measurement configuration information, to determine a measurement result.

In this embodiment, the measurement result may be used to indicate a measurement value obtained by performing the inter-base-station cross-link interference measurement in the at least one time unit.

In this embodiment, the purpose of performing the inter-base-station cross-link interference measurement is achieved, and the network performance is optimized.

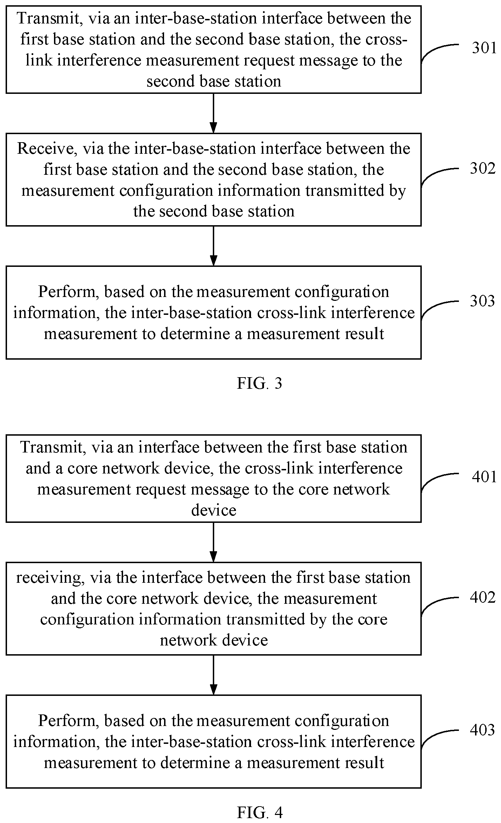

In some embodiments, an inter-base-station interface is provided between the first base station and the second base station. FIG. 3 is a flowchart illustrating a method for cross-link interference measurement according to another embodiment of the present disclosure. Referring to FIG. 3, the method may be performed by the first base station, and the method may include the following steps 301 to 303.

At step 301, the cross-link interference measurement request message is transmitted, via an inter-base-station interface between the first base station and the second base station, to the second base station.

In this embodiment, the inter-base-station interface includes, but is not limited to, an X2 interface, an Xn interface, and the like. The first base station can directly transmit the cross-link interference measurement request message to the second base station via the inter-base-station interface. The cross-link interference measurement request message is configured to request an inter-base-station cross-link interference measurement with a second base station, and the second base station is a neighboring base station of the first base station.

At step 302, the measurement configuration information transmitted by the second base station is received via the inter-base-station interface between the first base station and the second base station.

In this embodiment, the first base station can directly receive, via the inter-base-station interface, the measurement configuration information returned by the second base station. The measurement configuration information is information for the first base station to perform the inter-base-station cross-link interference measurement.

At step 303, the inter-base-station cross-link interference measurement is performed based on the measurement configuration information, to determine a measurement result.

In this embodiment, the measurement result may be used to indicate a measurement value obtained by performing the inter-base-station cross-link interference measurement in the at least one time unit.

In this embodiment, the first base station may interact with the second base station via the inter-base-station interface, to determine the measurement configuration information. The inter-base-station cross-link interference measurement can be performed based on the measurement configuration information. Therefore, the purpose of performing the inter-base-station cross-link interference measurement is achieved and the network performance is optimized.

In some embodiments, an inter-base-station interface is not provided between the first base station and the second base station. FIG. 4 is a flowchart illustrating a method for cross-link interference measurement according to another embodiment of the present disclosure. Referring to FIG. 4, the method may be performed by the first base station, and the method may include the following steps 401 to 403.

At step 401, the cross-link interference measurement request message is transmitted to the core network device via an interface between the first base station and the core network device.

In this embodiment, the interface between the first base station and the core network device includes, but is not limited to, an NG interface, and the first base station. In the case where an inter-base-station interface is not provided between the first base station and the second base station, the cross-link interference measurement request message can be transmitted to the core network device through the NG interface, and the core network device will forward the cross-link interference measurement request message to the second base station through an interface between the core network device and the second base station. The cross-link interference measurement request message is configured to request an inter-base-station cross-link interference measurement with a second base station, and the second base station is a neighboring base station of the first base station.

At step 402, the measurement configuration information transmitted by the core network device is received via an interface between the first base station and the core network device.

In this embodiment, the second base station may transmit the measurement configuration information to the core network device via an interface between the second base station and the core network device, and the measurement configuration information is forwarded by the core network device to the first base station via an interface between the first base station and the core network device. The measurement configuration information is information for the first base station to perform the inter-base-station cross-link interference measurement.

At step 403, the inter-base-station cross-link interference measurement is performed based on the measurement configuration information, to determine a measurement result.

In this embodiment, the measurement result may be used to indicate a measurement value obtained by performing the inter-base-station cross-link interference measurement in the at least one time unit.

In this embodiment, the first base station may interact with the second base station via the core network device, to determine the measurement configuration information. The inter-base-station cross-link interference measurement can be performed based on the measurement configuration information. Therefore, the purpose of performing the inter-base-station cross-link interference measurement is achieved and the network performance is optimized.

In some embodiments, the measurement configuration information includes, but is not limited to, at least one of: a downlink reference signal of the second base station measured by the first base station when the first base station performs the inter-base-station cross-link interference measurement; or resource configuration information for the downlink reference signal.

The downlink reference signal includes at least one of: a synchronization signal and physical broadcast channel (PBCH) block (SSB); a channel state information-reference signal (CSI-RS); or a positioning reference signal (PRS).

The resource configuration information for the downlink reference signal includes, but is not limited to, time domain resource configuration information, frequency domain resource configuration information, and space domain resource configuration information for the downlink reference signal.

In this embodiment, the first base station may measure the downlink reference signal of the second base station as indicated by the measurement configuration information, so as to determine a measurement result of the inter-base-station cross-link interference measurement.

In this embodiment, the first base station can perform the inter-base-station cross-link interference measurement based on the indication of the measurement configuration information. Therefore, the purpose of performing the inter-base-station cross-link interference measurement is achieved and the network performance is optimized.

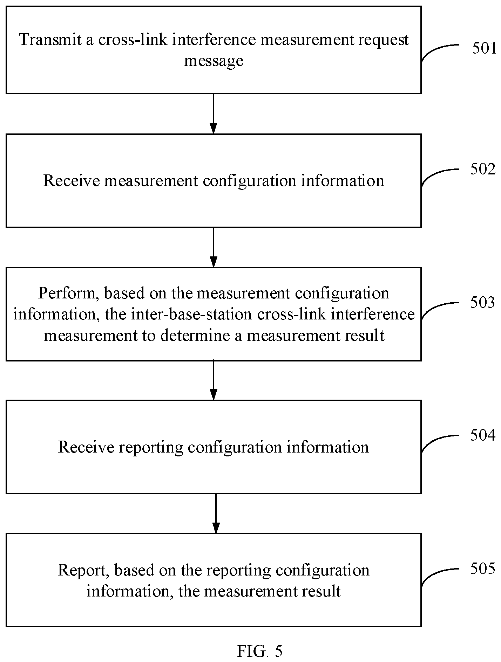

FIG. 5 is a flowchart illustrating a method for cross-link interference measurement according to another embodiment of the present disclosure. Referring to FIG. 5, the method may be performed by the first base station, and the method may include the following steps 501 to 505.

At step 501, the cross-link interference measurement request message is transmitted.

In this embodiment, the cross-link interference measurement request message is configured to request an inter-base-station cross-link interference measurement with a second base station, and the second base station is a neighboring base station of the first base station. The second base station may be any neighboring base station of the first base station that supports full duplex.

At step 502, the measurement configuration information is received.

In this embodiment, the measurement configuration information is information for the first base station to perform the inter-base-station cross-link interference measurement. The measurement configuration information may be configured by the second base station.

At step 503, the inter-base-station cross-link interference measurement is performed based on the measurement configuration information, to determine a measurement result.

In this embodiment, the measurement result may be used to indicate a measurement value obtained by performing the inter-base-station cross-link interference measurement in the at least one time unit.

At step 504, the reporting configuration information is received.

In this embodiment, the reporting configuration information is information for the first base station to report the measurement result. The reporting configuration information may be configured by the second base station.

In a possible implementation, an inter-base-station interface is provided between the first base station and the second base station, and the first base station may receive the reporting configuration information transmitted by the second base station via the inter-base-station interface.

In another possible implementation, when an inter-base-station interface is not provided between the first base station and the second base station, the second base station may transmit the reporting configuration information to the core network device, and the first base station receives the reporting configuration information forwarded by the core network device through an interface between the first base station and the core network device.

In this embodiment, the reporting configuration information includes, but is limited to, at least of a reporting condition or a reporting mode. The reporting condition is configured to indicate a minimum threshold value for reporting the measurement result. The reporting mode includes, is limited to, at least one of: reporting indication information for indicating that the measurement result meets the reporting condition; or reporting a measurement value corresponding to the measurement result.

At step 505, the measurement result is reported based on the reporting configuration information.

In a possible implementation, an inter-base-station interface is provided between the first base station and the second base station, and the first base station may report the measurement result to the second base station via the inter-base-station interface.

In another possible implementation, when an inter-base-station interface is not provided between the first base station and the second base station, the first base station can report the measurement result to the core network device through an interface between the first base station and the core network device, and the core network device forwards the measurement result to the second base station.

In this embodiment, when the reporting condition included in the reporting configuration information is met, the first base station can report the measurement result. Also/Alternatively, the first base station can report the measurement result based on the reporting mode included in the reporting configuration information.

In a possible implementation, the first base station can determine that the reporting condition is met when the cross-link interference value indicated by the measurement result is greater than or equal to a lowest threshold indicated by the reporting condition, and the first base station can report the measurement result.

In another possible implementation, the first base station may report indication information based on the reporting mode included in the reporting configuration information, and the indication information is configured to indicate that the measurement result meets the reporting condition.

In another possible implementation, the first base station can report a specific measurement value corresponding to the measurement result based on the reporting mode included in the reporting configuration information. That is, the measurement value obtained by performing the inter-base-station cross-link interference measurement is reported by the first base station.

In another possible implementation, the first base station can determine that the reporting condition is met when the cross-link interference value indicated by the measurement result is greater than or equal to a lowest threshold indicated by the reporting condition, and the first base station can report the indication information, or the specific measurement value corresponding to the measurement result.

In another possible implementation, the indication information in the present disclosure may be of a Boolean or enumerated type, or may be a specified field or a specified information unit, etc., and the present disclosure is not limited thereto.

In this embodiment, the first base station can report the measurement result of the inter-base-station cross-link interference measurement based on the reporting configuration information, such that the second base station can determine the measurement result. Therefore, the purpose of performing the inter-base-station cross-link interference measurement is achieved, and the network performance is optimized.

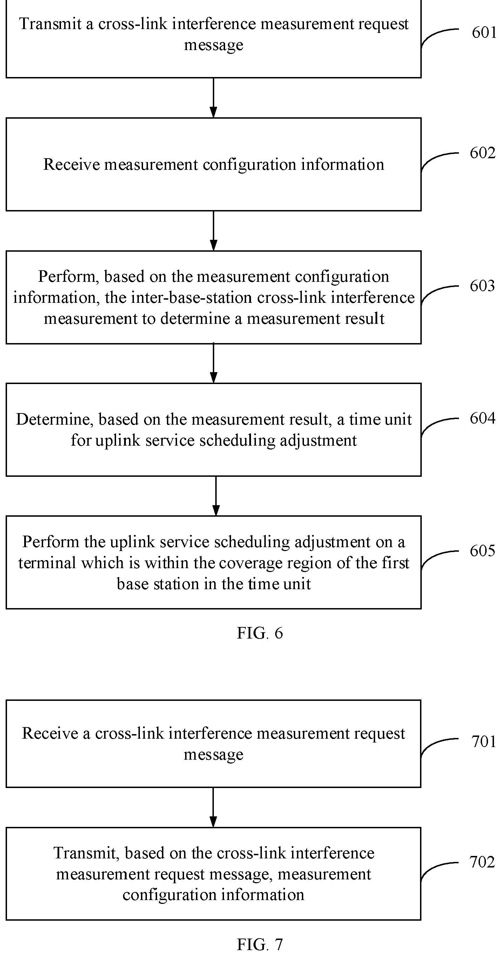

FIG. 6 is a flowchart illustrating a method for cross-link interference measurement according to another embodiment of the present disclosure. Referring to FIG. 6, the method may be performed by the first base station, and the method may include the following steps 601 to 605.

At step 601, the cross-link interference measurement request message is transmitted.

In this embodiment, the cross-link interference measurement request message is configured to request an inter-base-station cross-link interference measurement with a second base station, and the second base station is a neighboring base station of the first base station. The second base station may be any neighboring base station of the first base station that supports full duplex.

At step 602, the measurement configuration information is received.

In this embodiment, the measurement configuration information is information for the first base station to perform the inter-base-station cross-link interference measurement. The measurement configuration information may be configured by the second base station.

At step 603, the inter-base-station cross-link interference measurement is performed based on the measurement configuration information, to determine a measurement result.

In this embodiment, the measurement result may be used to indicate a measurement value obtained by performing the inter-base-station cross-link interference measurement in the at least one time unit.

At step 604, a time unit for uplink service scheduling adjustment is determined based on the measurement result.

In this embodiment, the time unit may be singular or plural in number, and the time units may be a time slot or a time symbol, etc., and the present disclosure is not limited thereto. The time unit for the uplink service adjustment may be a time unit in which the measurement value corresponding to the measurement result is greater than or equal to a specified threshold. The specified threshold may be the lowest reporting threshold configured in the reporting configuration information, or other threshold value that is separately defined and different from the lowest reporting threshold.

At step 605, the uplink service scheduling adjustment is performed on a terminal which is within the coverage region of the first base station in the time unit.

In a possible implementation, the first base station may stop scheduling the uplink services of one or more terminals within the coverage of the first base station in one or more time in which the uplink services are adjusted.

Stopping the scheduling of the uplink services of one or more terminals within the coverage of the first base station includes, but is not limited to stopping the scheduling of at least one of physical uplink control channel (PUCH), physical uplink shared channel (PUSCH) or sounding reference signal (SRS) for the terminals.

In this embodiment, the uplink service of the terminal can be flexibly scheduled by the first base station according to the measurement result of the inter-base-station cross-link interference measurement, such that the reliability of the service of the terminal is improved, and the present disclosure is easy to implement and has high availability.

The method for cross-link interference measurement provided by the present disclosure is described below at a second base station side.

An embodiment of the present disclosure provides a method for cross-link interference measurement. FIG. 7 is a flowchart illustrating a method for cross-link interference measurement according to the embodiment of the present disclosure. Referring to FIG. 7, the method can be performed by the second base station, and it will be understood that the second base station may be any base station that supports full duplex. The method may include the following steps 701 to 702.

At step 701, a cross-link interference measurement request message is received.

In this embodiment, the cross-link interference measurement request message is for a first base station to request an inter-base-station cross-link interference measurement with the second base station, and the first base station is a neighboring base station of the second base station. The first base station can also be a base station that supports full duplex.

At step 702, measurement configuration information is transmitted based on the cross-link interference measurement request message.

In this embodiment, the measurement configuration information is information for the first base station to perform the inter-base-station cross-link interference measurement.

In a possible implementation, the measurement configuration information includes at least one of: a downlink reference signal of the second base station measured by the first base station when the first base station performs the inter-base-station cross-link interference measurement; or resource configuration information for the downlink reference signal.

The downlink reference signal includes at least one of: a SSB; a CSI-RS; or PRS. The resource configuration information for the downlink reference signal includes, but is not limited to, time domain resource configuration information, frequency domain resource configuration information, and space domain resource configuration information for the downlink reference signal.

In this embodiment, the second base station can transmit, based on the cross-link interference measurement request message, the measurement configuration information, such that the first base station can perform the inter-base-station cross-link interference measurement based on the measurement configuration information. The purpose of performing the inter-base-station cross-link interference measurement is achieved, and the network performance is optimized.

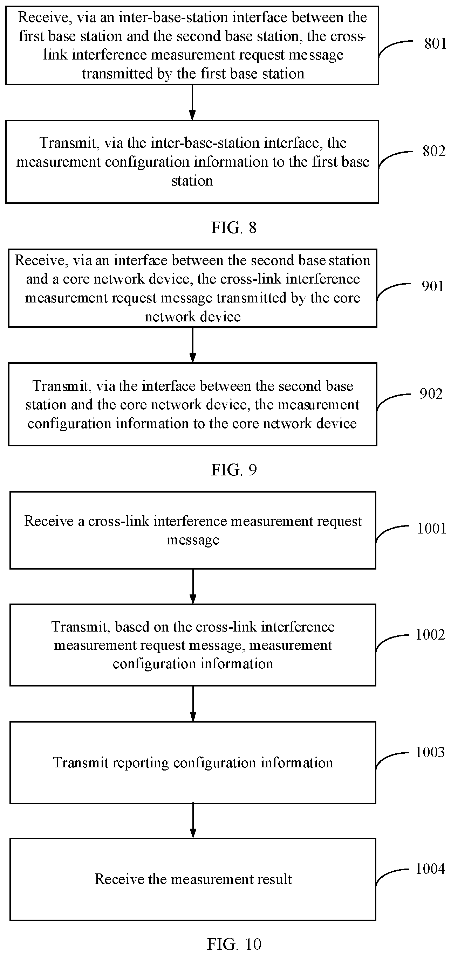

In some embodiments, an inter-base-station interface is provided between the first base station and the second base station. FIG. 8 is a flowchart illustrating a method for cross-link interference measurement according to another embodiment of the present disclosure. Referring to FIG. 8, the method may be performed by the second base station, and the method may include the following steps 801 to 802.

At step 801, the cross-link interference measurement request message transmitted by the first base station is received via the inter-base-station interface between the first base station and the second base station.

In this embodiment, the inter-base-station interface includes, but is not limited to, an X2 interface, an Xn interface, and the like. The second base station can directly receive the cross-link interference measurement request message transmitted by the first base station via the inter-base-station interface. The cross-link interference measurement request message is configured to request an inter-base-station cross-link interference measurement with a second base station, and the second base station is a neighboring base station of the first base station.

At step 802, the measurement configuration information is transmitted to the first base station via the inter-base-station interface.

In this embodiment, the second base station can directly transmit, via the inter-base-station interface, the measurement configuration information to the first base station. The measurement configuration information is information for the first base station to perform the inter-base-station cross-link interference measurement.

In a possible implementation, the measurement configuration information includes at least one of: a downlink reference signal of the second base station measured by the first base station when the first base station performs the inter-base-station cross-link interference measurement; or resource configuration information for the downlink reference signal.

The downlink reference signal includes at least one of: an SSB; a CSI-RS; or PRS. The resource configuration information for the downlink reference signal includes, but is not limited to, time domain resource configuration information, frequency domain resource configuration information, and space domain resource configuration information for the downlink reference signal.

In this embodiment, the second base station may interact with the first base station via the inter-base-station interface, to transmit the measurement configuration information to the first base station, such that the first base station performs the inter-base-station cross-link interference measurement based on the measurement configuration information. Therefore, the purpose of performing the inter-base-station cross-link interference measurement is achieved and the network performance is optimized.

In some embodiments, an inter-base-station interface is not provided between the first base station and the second base station. FIG. 9 is a flowchart illustrating a method for cross-link interference measurement according to another embodiment of the present disclosure. Referring to FIG. 9, the method may be performed by the second base station, and the method may include the following steps 901 to 902.

At step 901, the cross-link interference measurement request message transmitted by the core network device is received via the interface between the second base station and the core network device.

In this embodiment, the interface between the second base station and the core network device includes, but is not limited to, an NG interface. When an inter-base-station interface is not provided between the first base station and the second base station, the second base station can receive the cross-link interference measurement request messages transmitted by the core network device through the NG interface. The cross-link interference measurement request message is transmitted by the first base station, through the interface between the first base station and the core network device, to the core network device. The cross-link interference measurement request message is configured to request an inter-base-station cross-link interference measurement with a second base station, and the second base station is a neighboring base station of the first base station.

At step 902, the measurement configuration information is transmitted to the core network device via the interface between the second base station and the core network device.

In this embodiment, the second base station can transmit the measurement configuration information to the core network device through the interface between the second base station and the core network device, and the measurement configuration information is forwarded to the first base station by the core network device. The measurement configuration information is information for the first base station to perform the inter-base-station cross-link interference measurement.

In a possible implementation, the measurement configuration information includes at least one of: a downlink reference signal of the second base station measured by the first base station when the first base station performs the inter-base-station cross-link interference measurement; or resource configuration information for the downlink reference signal.

The downlink reference signal includes at least one of: a SSB; a CSI-RS; or PRS. The resource configuration information for the downlink reference signal includes, but is not limited to, time domain resource configuration information, frequency domain resource configuration information, and space domain resource configuration information for the downlink reference signal.

In this embodiment, the second base station may interact with the first base station via the core network device, the second base station transmits the measurement configuration information to the core network device, and the core network device forwards the measurement configuration information to the first base station, such that the first base station performs the inter-base-station cross-link interference measurement based on the measurement configuration information. Therefore, the purpose of performing the inter-base-station cross-link interference measurement is achieved and the network performance is optimized.

FIG. 10 is a flowchart illustrating a method for cross-link interference measurement according to another embodiment of the present disclosure. Referring to FIG. 10, the method may be performed by the second base station, and the method may include the following steps 1001 to 1004.

At step 1001, the cross-link interference measurement request message is received.

In this embodiment, the cross-link interference measurement request message is for a first base station to request an inter-base-station cross-link interference measurement with the second base station, and the first base station is a neighboring base station of the second base station. The first base station can also be a base station that supports full duplex.

At step 1002, measurement configuration information is transmitted based on the cross-link interference measurement request message.

In this embodiment, the measurement configuration information is information for the first base station to perform the inter-base-station cross-link interference measurement. The measurement configuration information may be configured by the second base station.

In a possible implementation, the measurement configuration information includes at least one of: a downlink reference signal of the second base station measured by the first base station when the first base station performs the inter-base-station cross-link interference measurement; or resource configuration information for the downlink reference signal.

The downlink reference signal includes at least one of: an SSB; a CSI-RS; or PRS. The resource configuration information for the downlink reference signal includes, but is not limited to, time domain resource configuration information, frequency domain resource configuration information, and space domain resource configuration information for the downlink reference signal.

At step 1003, the reporting configuration information is transmitted.

In this embodiment, the reporting configuration information is information for the first base station to report the measurement result. The reporting configuration information may be configured by the second base station.

In a possible implementation, an inter-base-station interface is provided between the first base station and the second base station, and the second base station may transmit the reporting configuration information to the first base station via the inter-base-station interface.

In another possible implementation, when an inter-base-station interface is not provided between the first base station and the second base station, the second base station may transmit the reporting configuration information to the core network device, and the first base station receives the reporting configuration information forwarded by the core network device through an interface between the first base station and the core network device.

In this embodiment, the reporting configuration information includes, but is limited to, at least of a reporting condition or a reporting mode. The reporting condition is configured to indicate a minimum threshold value for reporting the measurement result. The reporting mode includes, is limited to, at least one of: reporting indication information for indicating that the measurement result meets the reporting condition; or reporting a measurement value corresponding to the measurement result.

At step 1004, the measurement result is received.

In a possible implementation, an inter-base-station interface is provided between the first base station and the second base station, and the second base station may directly receive the measurement result transmitted by the first base station via the inter-base-station interface.

In another possible implementation, when an inter-base-station interface is not provided between the first base station and the second base station, the first base station can transmit the measurement result to the core network device through an interface between the first base station and the core network device, and the core network device can forward the measurement result to the second base station through the interface between the second base station and the core network device.

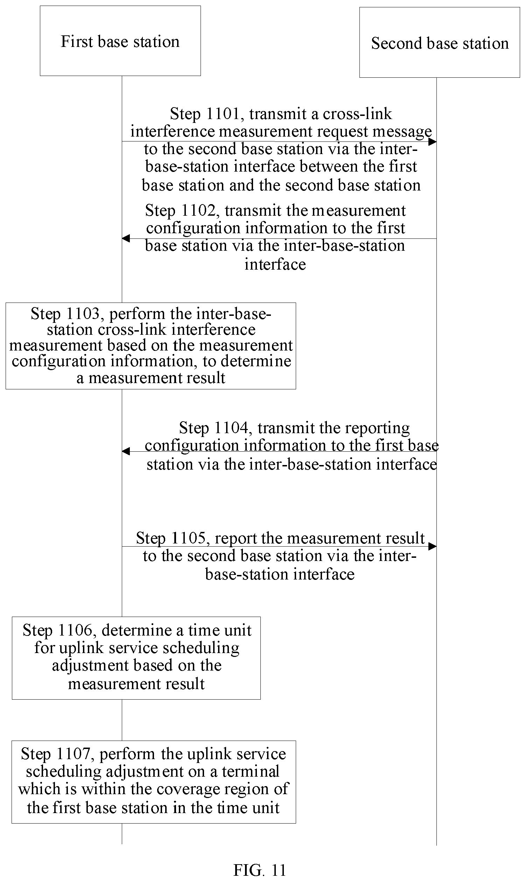

In this embodiment, the reporting configuration information may be configured by the second base station, the first base station can report the measurement result of the inter-base-station cross-link interference measurement based on the reporting configuration information, such that the second base station can determine the measurement result. Therefore, the purpose of performing the inter-base-station cross-link interference measurement is achieved, and the network performance is optimized. FIG. 11 is a flowchart illustrating a method for cross-link interference measurement according to another embodiment of the present disclosure. Referring to FIG. 11, the method may include the following steps 1101 to 1107.

At step 1101, the first base station transmits a cross-link interference measurement request message to the second base station via the inter-base-station interface between the first base station and the second base station.

In this embodiment, the inter-base-station interface includes, but is not limited to, an X2 interface, an Xn interface, and the like. The first base station can directly transmit the cross-link interference measurement request message to the second base station via the inter-base-station interface. The cross-link interference measurement request message is configured to request an inter-base-station cross-link interference measurement with a second base station, and the second base station is a neighboring base station of the first base station.

At step 1102, the second base station transmits the measurement configuration information to the first base station via the inter-base-station interface.

The measurement configuration information is information for the first base station to perform the inter-base-station cross-link interference measurement.

At step 1103, the first base station performs the inter-base-station cross-link interference measurement based on the measurement configuration information, to determine a measurement result.

At step 1104, the second base station transmits the reporting configuration information to the first base station via the inter-base-station interface.

In this embodiment, the reporting configuration information is information for the first base station to report the measurement result.

At step 1105, the first base station reports the measurement result to the second base station via the inter-base-station interface.

The reporting mode is similar to the mode in the step 505, which will not be described again.

At step 1106, the first base station determines a time unit for uplink service scheduling adjustment based on the measurement result.

In this embodiment, the time unit may be singular or plural in number, and the time units may be a time slot or a time symbol, and the present disclosure is not limited thereto. The time unit for the uplink service adjustment may be a time unit in which an inter-base-station cross-link interference value indicated by the measurement result is greater than or equal to a specified threshold.

At step 1107, the first base station performs the uplink service scheduling adjustment on a terminal which is within the coverage region of the first base station in the time unit.

The mode for performing the uplink service adjustment is similar to the mode in the step 605, which will not be described again. In this embodiment, the purpose of performing the inter-base-station cross-link interference measurement is achieved, the network performance is optimized, and the uplink service of the terminal can be flexibly scheduled, such that the reliability of the service of the terminal is improved, and the present disclosure is easy to implement and has high availability.

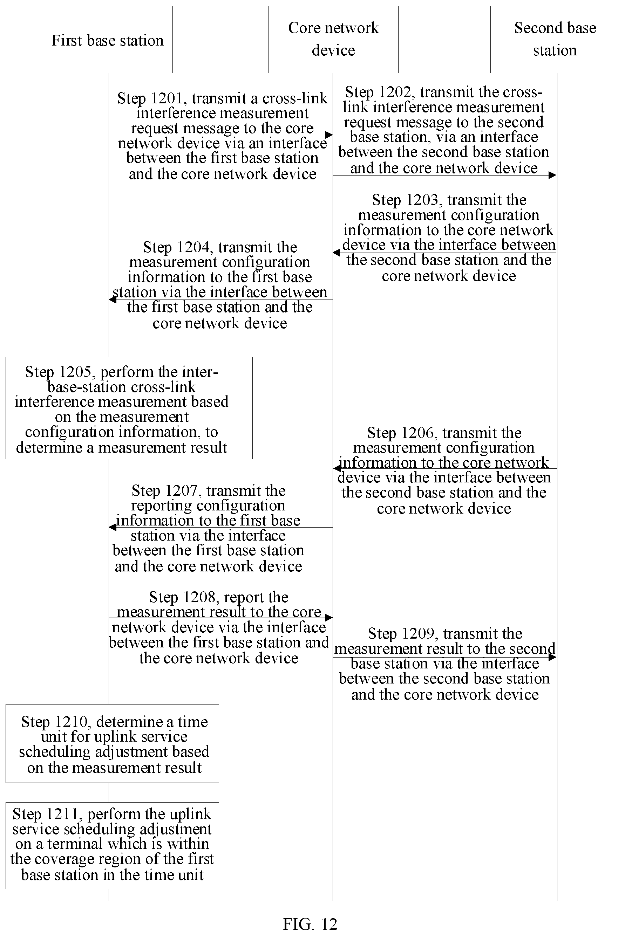

FIG. 12 is a flowchart illustrating a method for cross-link interference measurement according to another embodiment of the present disclosure. Referring to FIG. 12, the method may include the following steps 1201 to 1211.

At step 1201, the first base station transmits a cross-link interference measurement request message to the core network device via an interface between the first base station and the core network device.

In this embodiment, the interface between the first base station and the core network device includes, but is not limited to, an NG interface. The first base station can transmit the cross-link interference measurement request message to the core network device via the interface between the first base station and the core network device. The cross-link interference measurement request message is configured to request an inter-base-station cross-link interference measurement with a second base station, and the second base station is a neighboring base station of the first base station.

At step 1202, the core network device transmits the cross-link interference measurement request message to the second base station, via an interface between the second base station and the core network device.

In this embodiment, the interface between the second base station and the core network device includes, but is not limited to, an NG interface.

At step 1203, the second base station transmits the measurement configuration information to the core network device via the interface between the second base station and the core network device.

The measurement configuration information is information for the first base station to perform the inter-base-station cross-link interference measurement.

At step 1204, the core network device transmits the measurement configuration information to the first base station via the interface between the first base station and the core network device.

At step 1205, the first base station performs the inter-base-station cross-link interference measurement based on the measurement configuration information, to determine a measurement result.

At step 1206, the second base station transmits the measurement configuration information to the core network device via the interface between the second base station and the core network device.

In this embodiment, the reporting configuration information is information for the first base station to report the measurement result.

At step 1207, the core network device transmits the reporting configuration information to the first base station via the interface between the first base station and the core network device.

At step 1208, the first base station reports the measurement result to the core network device via the interface between the first base station and the core network device.

The reporting mode is similar to the mode in the step 505, which will not be described again.

At step 1209, the core network device transmits the measurement result to the second base station via the interface between the second base station and the core network device.

At step 1210, the first base station determines a time unit for uplink service scheduling adjustment based on the measurement result.

In this embodiment, the time unit may be singular or plural in number, and the time units may be a time slot or a time symbol, and the present disclosure is not limited thereto. The time unit for the uplink service adjustment may be a time unit in which an inter-base-station cross-link interference value indicated by the measurement result is greater than or equal to a specified threshold.

At step 1211, the first base station performs the uplink service scheduling adjustment on a terminal which is within the coverage region of the first base station in the time unit.

The mode for performing the uplink service adjustment is similar to the mode in the step 605, which will not be described again.

In this embodiment, the purpose of performing the inter-base-station cross-link interference measurement is achieved, the network performance is optimized, and the uplink service of the terminal can be flexibly scheduled, such that the reliability of the service of the terminal is improved, and the present disclosure is easy to implement and has high availability.

Corresponding to the foregoing method embodiments, the present disclosure further provides corresponding apparatuses embodiments.

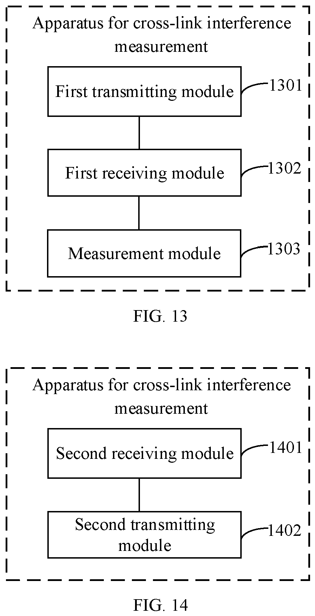

FIG. 13 is a block diagram illustrating an apparatus for cross-link interference measurement according to an embodiment of the present disclosure. The apparatus is applied to the first base station. As shown in FIG. 13, The apparatus may include a first transmitting module 1301, a first receiving module 1302, and a measurement module 1303.

The first transmitting module 1301 is configured to transmit a cross-link interference measurement request message, where the cross-link interference measurement request message is configured to request an inter-base-station cross-link interference measurement with a second base station, and the second base station is a neighboring base station of the first base station.

The first receiving module 1302 is configured to receive measurement configuration information, where the measurement configuration information is information for the first base station to perform the inter-base-station cross-link interference measurement.

The measurement module 1303 is configured to perform, based on the measurement configuration information, the inter-base-station cross-link interference measurement to determine a measurement result.

In an embodiment, the first transmitting module 1301 includes a first transmitting submodule.

The first transmitting submodule is configured to transmit, via an inter-base-station interface between the first base station and the second base station, the cross-link interference measurement request message to the second base station.

The first receiving module 1302 includes a first receiving submodule.

The first receiving submodule is configured to receive, via the inter-base-station interface, the measurement configuration information transmitted by the second base station.

In an embodiment, the first transmitting module 1301 includes a second transmitting submodule.

The second transmitting submodule is configured to transmit, via an interface the first base station and a core network device, the cross-link interference measurement request message to the core network device, where the cross-link interference measurement request message is forwarded by the core network device to the second base station.

The first receiving module 1302 includes a second receiving submodule.

The second receiving submodule is configured to receive, via the interface between the first base station and the core network device, the measurement configuration information transmitted by the core network device, where the measurement configuration information is transmitted by the second base station to the core network device.

In an embodiment, the measurement configuration information includes at least one of: a downlink reference signal of the second base station measured by the first base station when the first base station performs the inter-base-station cross-link interference measurement; or resource configuration information for the downlink reference signal.

In an embodiment, the downlink reference signal includes at least one of: a synchronization signal and physical broadcast channel (PBCH) block (SSB); a channel state information-reference signal (CSI-RS); or a positioning reference signal (PRS).

In an embodiment, the apparatus further includes a third receiving module, and a reporting module.

The third receiving module is configured to receive reporting configuration information, where the reporting configuration information is information for the first base station to report the measurement result.

The reporting module is configured to report, based on the reporting configuration information, the measurement result.

In an embodiment, he reporting configuration information includes at least of a reporting condition or a reporting mode.

The reporting mode includes at least one of a first reporting submodule or a second reporting submodule.

The first reporting submodule is configured to report, in response to the reporting condition being met, the measurement result.

The second reporting submodule is configured to report, based on the reporting mode, the measurement result.

In an embodiment, the reporting condition is configured to indicate a minimum threshold value for reporting the measurement result; and/or,
the reporting mode includes at least one of:
reporting indication information for indicating that the measurement result meets the reporting condition; or
reporting a measurement value corresponding to the measurement result.

In an embodiment, the apparatus further includes a determination module and an adjustment module.

The determination module is configured to determine, based on the measurement result, a time unit for uplink service scheduling adjustment.

The adjustment module is configured to perform the uplink service scheduling adjustment on a terminal which is within the coverage region of the first base station in the time unit.

In an embodiment, the adjustment module includes an adjustment submodule.

The adjustment submodule is configured to stop uplink service scheduling for the terminal.

FIG. 14 is a block diagram illustrating an apparatus for cross-link interference measurement according to another embodiment of the present disclosure. The apparatus is applied to the second base station. As shown in FIG. 14, The apparatus may include a second receiving module 1401, and a second transmitting module 1402.

The second receiving module 1401 is configured to receive a cross-link interference measurement request message, where the cross-link interference measurement request message is for a first base station to request an inter-base-station cross-link interference measurement with the second base station, and the first base station is a neighboring base station of the second base station.

The second transmitting module 1402 is configured to transmit, based on the cross-link interference measurement request message, measurement configuration information, where the measurement configuration information is information for the first base station to perform the inter-base-station cross-link interference measurement.

In an embodiment, the second receiving module 1401 includes a third receiving submodule.

The third receiving submodule is configured to receive, via an inter-base-station interface between the first base station and the second base station, the cross-link interference measurement request message transmitted by the first base station.

The second transmitting module 1402 includes a third transmitting submodule.

The third transmitting submodule is configured to transmit, via the inter-base-station interface, the measurement configuration information to the first base station.

In an embodiment, the second receiving module 1401 further includes a fourth receiving submodule.

The fourth receiving submodule is configured to receive, via an interface between the second base station and a core network device, the cross-link interference measurement request message transmitted by the core network device, where the cross-link interference measurement request message is transmitted by the first base station to the core network device;

The second transmitting module 1402 further includes a fourth transmitting submodule.

The fourth transmitting submodule is configured to transmit, via the interface between the second base station and the core network device, the measurement configuration information to the core network device, where the measurement configuration information is forwarded by the core network device to the first base station.

In an embodiment, the measurement configuration information includes at least one of: a downlink reference signal of the second base station measured by the first base station when the first base station performs the inter-base-station cross-link interference measurement; or resource configuration information for the downlink reference signal.

In an embodiment, the downlink reference signal includes at least one of: a synchronization signal and physical broadcast channel (PBCH) block (SSB); a channel state information-reference signal (CSI-RS); or a positioning reference signal (PRS).

In an embodiment, the apparatus further includes a fourth transmitting module and a fourth receiving module.

The fourth transmitting module is configured to transmit reporting configuration information, where the reporting configuration information is information for the first base station to report the measurement result of the inter-base-station cross-link interference measurement.

The fourth receiving module is configured to receive the measurement result.

In an embodiment, he reporting configuration information includes at least of a reporting condition or a reporting mode.

In an embodiment, the reporting condition is configured to indicate a minimum threshold value for reporting the measurement result; and/or,
the reporting mode includes at least one of: reporting indication information for indicating that the measurement result meets the reporting condition; or reporting a measurement value corresponding to the measurement result.

Since the embodiments of the apparatus substantially corresponds to the embodiments of the method, relevant parts may be referred to the description of the embodiments of the method. The apparatus examples described above are merely illustrative, where the units described as separate components may or may not be physically separated, and the components displayed as units may or may not be physical units, i.e., may be located in one place or may be distributed to multiple network units. Some or all of these modules can be selected according to actual needs to achieve the purpose of the solution of the present disclosure. It may be understood and implemented by those skilled in the art without creative work.

An embodiment of the present disclosure further provides a computer-readable storage medium, storing computer programs thereon, where the computer programs, when executed by a processor, cause the processor to perform the method for cross-link interference measurement at the first base station side.

An embodiment of the present disclosure further provides a computer-readable storage medium, storing computer programs thereon, where the computer programs, when executed by a processor, cause the processor to perform the method for cross-link interference measurement at the second base station side.

Correspondingly, the present disclosure provides a device for cross-link interference measurement, and the device includes:
a processor; and
a memory storing instructions executable by the processor;
where the instructions, when executed by the processor, cause the processor to perform the method for cross-link interference measurement at the first base station side.

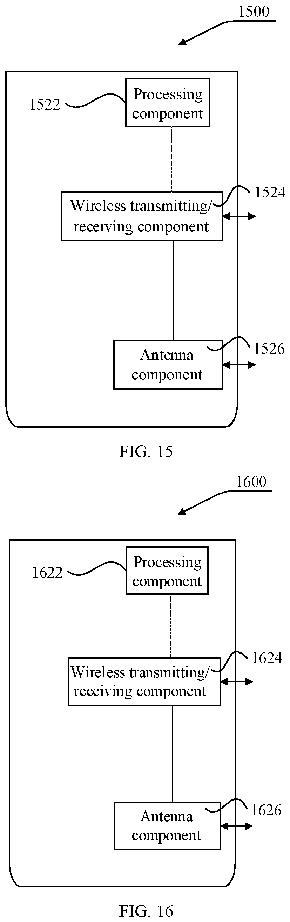

FIG. 15 is a schematic structural diagram illustrating a device 1500 for cross-link interference measurement according to an embodiment of the present disclosure. The device 1500 may be provided as a base station. Referring to FIG. 15, the device 1500 includes a processing component 1522, a wireless transmitting/receiving component 1524, an antenna component 1526, and a signal processing portion specific to a wireless interface. The processing component 1522 may further include one or more processors.

One of the processors in the processing component 1522 may be configured to perform the method for cross-link interference measurement at the first base station side.

Correspondingly, the present disclosure provides a device for cross-link interference measurement, and the device includes: a processor; and a memory storing instructions executable by the processor; where the instructions, when executed by the processor, cause the processor to perform the method for cross-link interference measurement at the second base station side.

FIG. 16 is a schematic structural diagram illustrating a device 1600 for cross-link interference measurement according to an embodiment of the present disclosure. The device 1600 may be provided as a base station. Referring to FIG. 16, the device 1600 includes a processing component 1622, a wireless transmitting/receiving component 1624, an antenna component 1626, and a signal processing portion specific to a wireless interface. The processing component 1622 may further include one or more processors.

One of the processors in the processing component 1622 may be configured to perform the method for cross-link interference measurement at the second base station side.

After considering the specification and practicing the present disclosure, those skilled in the art would easily conceive of other implementations of the present disclosure. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the disclosure is to be limited only by the appended claims.

## Claims

1. A method for cross-link interference measurement, performed by a first base station, and comprising:
transmitting a cross-link interference measurement request message, wherein the cross-link interference measurement request message is configured to request an inter-base-station cross-link interference measurement with a second base station, and the second base station is a neighboring base station of the first base station;
receiving measurement configuration information, wherein the measurement configuration information is information for the first base station to perform the inter-base-station cross-link interference measurement; and
performing, based on the measurement configuration information, the inter-base-station cross-link interference measurement to determine a measurement result.

2. The method of claim 1, wherein
the transmitting the cross-link interference measurement request message comprises:
transmitting, via an inter-base-station interface between the first base station and the second base station, the cross-link interference measurement request message to the second base station;
the receiving the measurement configuration information comprises:
receiving, via the inter-base-station interface between the first base station and the second base station, the measurement configuration information transmitted by the second base station.

3. The method of claim 1, wherein
the transmitting the cross-link interference measurement request message comprises:
transmitting, via an interface between the first base station and a core network device, the cross-link interference measurement request message to the core network device, wherein the cross-link interference measurement request message is forwarded by the core network device to the second base station;
the receiving the measurement configuration information comprises:
receiving, via the interface between the first base station and the core network device, the measurement configuration information transmitted by the core network device, wherein the measurement configuration information is transmitted by the second base station to the core network device.

4. The method of claim 1, wherein the measurement configuration information comprises at least one of:
a downlink reference signal of the second base station measured by the first base station when the first base station performs the inter-base-station cross-link interference measurement; or
resource configuration information for the downlink reference signal.

5. The method of claim 4, wherein the downlink reference signal comprises at least one of:
a synchronization signal and physical broadcast channel (PBCH) block (SSB);
a channel state information-reference signal (CSI-RS); or
a positioning reference signal (PRS).

6. The method of claim 1, further comprising:
receiving reporting configuration information, wherein the reporting configuration information is information for the first base station to report the measurement result; and
reporting, based on the reporting configuration information, the measurement result.

7. The method of claim 6, wherein the reporting configuration information comprises at least of a reporting condition or a reporting mode;
the reporting, based on the reporting configuration information, the measurement result comprises at least one of:
reporting, in response to the reporting condition being met, the measurement result; or
reporting, based on the reporting mode, the measurement result.

8. The method of claim 7, wherein
the reporting condition is configured to indicate a minimum threshold value for reporting the measurement result; and/or,
the reporting mode comprises at least one of:
reporting indication information for indicating that the measurement result meets the reporting condition; or
reporting a measurement value corresponding to the measurement result.

9. The method of claim 1, further comprising:
determining, based on the measurement result, a time unit for uplink service scheduling adjustment; and
performing the uplink service scheduling adjustment on a terminal which is within a coverage region of the first base station in the time unit.

10. The method of claim 9, wherein the performing the uplink service scheduling adjustment on the terminal which is within the coverage region of the first base station in the time unit comprises:
stopping uplink service scheduling for the terminal.

11. A method for cross-link interference measurement, performed by a second base station, and comprising:
receiving a cross-link interference measurement request message, wherein the cross-link interference measurement request message is for a first base station to request an inter-base-station cross-link interference measurement with the second base station, and the first base station is a neighboring base station of the second base station; and
transmitting, based on the cross-link interference measurement request message, measurement configuration information, wherein the measurement configuration information is information for the first base station to perform the inter-base-station cross-link interference measurement.

12. The method of claim 11, wherein
the receiving the cross-link interference measurement request message comprises:
receiving, via an inter-base-station interface between the first base station and the second base station, the cross-link interference measurement request message transmitted by the first base station;
the transmitting the measurement configuration information comprises:
transmitting, via the inter-base-station interface, the measurement configuration information to the first base station.

13. The method of claim 11, wherein
the receiving the cross-link interference measurement request message comprises:
receiving, via an interface between the second base station and a core network device, the cross-link interference measurement request message transmitted by the core network device, wherein the cross-link interference measurement request message is transmitted by the first base station to the core network device;
the transmitting the measurement configuration information comprises:
transmitting, via the interface between the second base station and the core network device, the measurement configuration information to the core network device, wherein the measurement configuration information is forwarded by the core network device to the first base station.

14. The method of claim 11, wherein the measurement configuration information comprises at least one of:
a downlink reference signal of the second base station measured by the first base station when the first base station performs the inter-base-station cross-link interference measurement; or
resource configuration information for the downlink reference signal.

15. The method of claim 14, wherein the downlink reference signal comprises at least one of:
a synchronization signal and physical broadcast channel (PBCH) block (SSB);
a channel state information-reference signal (CSI-RS); or
a positioning reference signal (PRS).

16. The method of claim 11, further comprising:
transmitting reporting configuration information, wherein the reporting configuration information is information for the first base station to report the measurement result of the inter-base-station cross-link interference measurement; and
receiving the measurement result.

17. The method of claim 16, wherein the reporting configuration information comprises at least of a reporting condition or a reporting mode.

18. The method of claim 17, wherein
the reporting condition is configured to indicate a minimum threshold value for reporting the measurement result; and/or,
the reporting mode comprises at least one of:
reporting indication information for indicating that the measurement result meets the reporting condition; and
reporting a measurement value corresponding to the measurement result.

19. An apparatus for cross-link interference measurement, applied to a first base station, and comprising:
a first transmitting module, configured to transmit a cross-link interference measurement request message, wherein the cross-link interference measurement request message is configured to request an inter-base-station cross-link interference measurement with a second base station, and the second base station is a neighboring base station of the first base station;
a first receiving module, configured to receive measurement configuration information, wherein the measurement configuration information is information for the first base station to perform the inter-base-station cross-link interference measurement; and
a measurement module, configured to perform, based on the measurement configuration information, the inter-base-station cross-link interference measurement to determine a measurement result.

20. The apparatus of claim 19, wherein the measurement configuration information comprises at least one of:
a downlink reference signal of the second base station measured by the first base station when the first base station performs the inter-base-station cross-link interference measurement; or
resource configuration information for the downlink reference signal.

21. The apparatus of claim 20, wherein the downlink reference signal comprises at least one of:
a synchronization signal and physical broadcast channel (PBCH) block (SSB);
a channel state information-reference signal (CSI-RS); or
a positioning reference signal (PRS).

22. The apparatus of claim 19, further comprising:
a third receiving module, configured to receive reporting configuration information, wherein the reporting configuration information is information for the first base station to report the measurement result; and
a reporting module, configured to report, based on the reporting configuration information, the measurement result.

23. The apparatus of claim 19, further comprising:
a determination module, configured to determine, based on the measurement result, a time unit for uplink service scheduling adjustment; and
an adjustment module, configured to perform the uplink service scheduling adjustment on a terminal which is within the coverage region of the first base station in the time unit.

24. An apparatus for cross-link interference measurement, applied to a second base station, and comprising:
a second receiving module, configured to receive a cross-link interference measurement request message, wherein the cross-link interference measurement request message is for a first base station to request an inter-base-station cross-link interference measurement with the second base station, and the first base station is a neighboring base station of the second base station; and
a second transmitting module, configured to transmit, based on the cross-link interference measurement request message, measurement configuration information, wherein the measurement configuration information is information for the first base station to perform the inter-base-station cross-link interference measurement.

25. The apparatus of claim 24, wherein the measurement configuration information comprises at least one of:
a downlink reference signal of the second base station measured by the first base station when the first base station performs the inter-base-station cross-link interference measurement; or
resource configuration information for the downlink reference signal.

26. The apparatus of claim 25, wherein the downlink reference signal comprises at least one of:
a synchronization signal and physical broadcast channel (PBCH) block (SSB);
a channel state information-reference signal (CSI-RS); or
a positioning reference signal (PRS).

27. The apparatus of claim 24, further comprising:
a fourth transmitting module, configured to transmit reporting configuration information, wherein the reporting configuration information is information for the first base station to report the measurement result of the inter-base-station cross-link interference measurement; and
a fourth receiving module, configured to receive the measurement result.

28. A computer-readable storage medium, storing computer programs thereon, wherein the computer programs, when executed by a processor, cause the processor to perform the method for cross-link interference measurement of any one of claims 1 to 10.

29. A computer-readable storage medium, storing computer programs thereon, wherein the computer programs, when executed by a processor, cause the processor to perform the method for cross-link interference measurement of any one of claims 11 to 18.

30. A device for cross-link interference measurement, comprising:
a processor; and
a memory storing instructions executable by the processor;
wherein the instructions, when executed by the processor, cause the processor to perform the method for cross-link interference measurement of any one of claims 1 to 10.

31. A device for cross-link interference measurement, comprising:
a processor; and
a memory storing instructions executable by the processor;
wherein the instructions, when executed by the processor, cause the processor to perform the method for cross-link interference measurement of any one of claims 11 to 18.
